# EUROPEAN PATENT APPLICATION

(11) **EP 2 175 542 A2**
(43) Date of publication of application: **14.04.2010**
(21) Application number: 09012658.2
(22) Date of filing: 06.10.2009
(51) Int. Cl.: H02J 7/00

(54) **Charging apparatus**

(30) Priority: 07.10.2008 JP 2008260646
(71) Applicant: Makita Corporation, Anjo-shi, Aichi-ken 446-8502 (JP)
(72) Inventor: Shimizu, Yoshiharu, Anjo-shi Aichi-ken, 446-8502 (JP); Suzuki, Hitoshi, Anjo-shi Aichi-ken, 446-8502 (JP)
(74) Representative: Kramer - Barske - Schmidtchen

(57) **Abstract**

A charging apparatus includes: a charging voltage output unit (11); a duty ratio setting unit (171); a PWM signal output unit (171,174); a reference voltage generation unit (181); a reference voltage limit unit (181); a detected voltage generation unit (183); and a charging voltage control unit (OP1,184,11). The reference voltage generation unit (181) generates a reference voltage for determining whether or not a charging voltage has reached a target charging voltage, by smoothing a PWM signal outputted from the PWM signal output unit (171,174). The reference voltage limit unit (181) limits at least one of a maximum value and a minimum value of the reference voltage generated by the reference voltage generation unit (181).

## Description

### BACKGROUND

The present invention relates to a charging apparatus that charges a battery of an electric power tool.

A first example of conventional charging apparatuses that charges a battery is disclosed in Unexamined Japanese Patent Publication No. 08-031461.

The charging apparatus of the first example is to charge the battery which outputs a specific voltage. The charging apparatus is configured such that a reference voltage for determining whether or not a charging voltage to be outputted to the battery has reached a predetermined target charging voltage, can be adjusted by a variable resistor.

Also, the first example is configured such that the charging voltage is controlled based on the reference voltage so as to reach the target charging voltage.

A second example of conventional charging apparatuses is disclosed in Unexamined Japanese Patent Publication No. 2003-284334. In the second example, a first reference voltage is supplied to a level-shift circuit by which a second reference voltage, larger than the first reference voltage and supplied to an integration circuit, is generated. Supply of the second reference voltage to the integration circuit is controlled by a PWM signal, thereby allowing an output voltage of the integration circuit varies from 0 V to the second reference voltage.

### SUMMARY

In a battery-powered electric power tool, since a required output voltage of the battery varies depending on a type of the electric power tool, a charging voltage necessary to charge the battery may vary. Therefore, in the above described first example, there may be a problem that when a user brings several types of electric power tools to a work station, it is necessary to bring several types of charging apparatuses as well to the work station.

In view of the above, it can be conceived in the first example to use the output voltage from the integration circuit in the second example as a reference voltage, instead of the reference voltage generated by using the variable resistor. However, although a range of change in the output voltage from the integration circuit in the second example can be wider than a range of change in the reference voltage in the first example, it may be conceived that if a duty ratio of the PWM signal is not appropriately set, the output voltage of the integration circuit becomes an inappropriate voltage.

It would be desirable that the present invention provides a charging apparatus which charges a battery of an electric power tool and in which a reference voltage for determining whether or not a charging voltage for charging the battery has reached a target charging voltage, can be changed to any values within an appropriate range.

The charging apparatus according to the present invention includes a charging voltage output unit, a duty ratio setting unit, a PWM signal output unit, a reference voltage generation unit, a reference voltage limit unit, a detected voltage generation unit, and a charging voltage control unit.

In the charging apparatus, the charging voltage output unit outputs a charging voltage which is a voltage to change a battery for an electric power tool, to the battery; the duty ratio setting unit sets a duty ratio of a PWM signal based on a target charging voltage which is a target voltage for the charging voltage; the PWM signal output unit outputs the PWM signal having the duty ratio set by the duty ratio setting unit; the reference voltage generation unit generates a reference voltage for determining whether or not the charging voltage has reached the target charging voltage by smoothing the PWM signal outputted from the PWM signal output unit; the reference voltage limit unit limits at least one of a maximum value and a minimum value of the reference voltage generated by the reference voltage generation unit; the detected voltage generation unit detects the charging voltage outputted from the charging voltage output unit and generates a detected voltage which is a voltage in accordance with a result of the detection; and the charging voltage control unit controls the charging voltage outputted from the charging voltage output unit based on the detected voltage and the reference voltage.

In the charging apparatus constituted as above, it is possible to generate the reference voltage variable to any value by smoothing the PWM signal. It is also possible to limit the at least one of the maximum value and the minimum value of the reference voltage. In view of the above, if the at least one of the maximum value and the minimum value of the reference voltage is appropriately set, the reference voltage can be inhibited from deviating from an appropriate range even when the duty ratio of the PWM signal is not appropriately set.

That is to say, the present invention can provide the charging apparatus in which the reference voltage can be varied to any value within the appropriate range.

The reference voltage limit unit may be configured in any manner so as to limit the at least one of the maximum value and the minimum value of the reference voltage.

For example, the reference voltage limit unit may include a first resistor, a second resistor, and a third resistor. In the reference voltage limit unit, the PWM signal may be applied to one end of the first resistor, a preassigned first voltage may be applied to one end of the second resistor, and a preassigned second voltage larger than the first voltage may be applied to one end of the third resistor. Also, the other end of the first resistor, the other end of the second resistor, and the other end of the third resistor may be connected to each other.

In the case that the reference voltage limit unit is configured as above, when an amplitude of a voltage of the PWM signal that can determine a magnitude of the reference voltage, a magnitude of the first voltage, a magnitude of the second voltage, a resistance value of the first resistor, a resistance value of the second resistor, and a resistance value of the third resistor are appropriately set, a maximum value and a minimum value of a voltage generated at a point where the other end of the first resistor, the other end of the second resistor, and the other end of the third resistor are connected to each other, can be limited to a predetermined magnitude.

Accordingly, by supplying the voltage generated at the point where the other end of the first resistor, the other end of the second resistor, and the other end of the third resistor are connected to each other, as the reference voltage to the charging voltage control unit, the magnitude of the reference voltage to be supplied to the charging voltage control unit can be inhibited from deviating from the appropriate range.

For instance, the voltage of the PWM signal when a logic level of the PWM signal is "Low" may be set to be equal to the first voltage, and the amplitude in the voltage of the PWM signal may be set to be equal to a voltage difference between the first voltage and the second voltage.

In this case, when the duty ratio of the PWM signal becomes a maximum ratio (i.e., 100 %), for example, the magnitude of the reference voltage applied to the one end of the first resistor and the magnitude of the second voltage applied to the one end of the third resistor are the same.

At the time above, in the reference voltage limit unit, an equivalent circuit is formed in which the first resistor and the third resistor are parallel-connected to each other, and the second resistor is series-connected to the parallel-connected circuit. In the equivalent circuit as such, the reference voltage has a magnitude obtained by dividing the amplitude in the voltage of the PWM signal (the voltage difference between the first voltage and the second voltage), by a combined resistor of the first resistor and the third resistor, and the second resistor.

When the duty ratio of the PWM signal becomes a minimum ratio (i.e., 0 %), the magnitude of the reference voltage applied to the one end of the first resistor and the magnitude of the first voltage applied to the one end of the second resistor are the same.

At the time above, in the reference voltage limit unit, an equivalent circuit is formed in which the first resistor and the second resistor are parallel-connected to each other, and the third resistor is series-connected to the parallel-connected circuit. In the equivalent circuit as such, the reference voltage has a magnitude obtained by dividing the voltage difference between the first voltage and the second voltage, by a combined resistor of the first resistor and the second resistor, and the third resistor.

That is, according to the above reference voltage limit unit, it is possible to make the maximum value of the reference voltage smaller than the amplitude in the voltage of the PWM signal, and to make the minimum value of the reference voltage larger than the voltage of the PWM signal when the logic level of the PWM signal is "Low".

The reference voltage generation unit may be configured in any manner so as to smooth the PWM signal. For example, the reference voltage generation unit may include at least one capacitor for smoothing the PWM signal.

In this case, the PWM signal can be smoothed by means of a simplified circuit configuration. Also, in this case, the charging apparatus may include a discharge unit that discharges an electric charge accumulated in the at least one capacitor.

According to the charging apparatus as constituted above, by discharging the electric charge accumulated in the at least one capacitor, the reference voltage may be rapidly decreased.

In addition, the above charging apparatus may include a reference voltage detection unit and a duty ratio adjustment unit. The reference voltage detection unit detects a magnitude of the reference voltage. The duty ratio adjustment unit adjusts the duty ratio set by the duty ratio setting unit, such that the magnitude of the reference voltage detected by the reference voltage detection unit coincides with a magnitude of a target reference voltage which is a target voltage for the reference voltage in accordance with the target charging voltage.

In the charging apparatus constituted as above, since the duty ratio of the PWM signal is adjusted such that the magnitude of the reference voltage coincides with the magnitude of the target reference voltage, the reference voltage can be accurately reached to the target reference voltage, and further, the charging voltage can be accurately reached to the target charging voltage.

The target charging voltage may be fixed during charging or varied during charging.

The charging apparatus may include a target charging voltage setting unit that sets the target charging voltage based on at least one preassigned setting condition.

In this case, it is possible to set the target charging voltage in accordance with the at least one setting condition.

In the case that the charging apparatus includes an environment detection unit that detects an ambient environment of the charging apparatus, for example, at least a result of the detection by the environment detection unit may be set to the target charging voltage setting unit as the at least one setting condition.

In this case, since it is possible to set the target charging voltage depending on the ambient environment of the charging apparatus, the battery can be charged by the charging voltage depending on the ambient environment of the charging apparatus.

The environment detection unit may detect any environment as an object of the detection. The object of the detection may be such as a temperature, humidity, and the like.

In the case that the charging apparatus includes a battery information obtaining unit that obtains from the battery a battery information which is information related to the battery, for example, at least the battery information obtained by the battery information obtaining unit may be set to the target charging voltage setting unit as the at least one setting condition.

In this case, since it is possible to set the target charging voltage depending on the information related to the battery, the battery can be charged by the charging voltage depending on the information related to the battery.

The battery information may be any information related to the battery.

In the case that the battery information is information indicating at least one of characteristics of the battery, for example, it is possible to set the target charging voltage depending on the at least one of characteristics of the battery, and further, to charge the battery by the charging voltage depending on the at least one of characteristics of the battery.

In the case that the battery information is information indicating use history of the battery, for example, it is possible to set the target charging voltage depending on the use history of the battery, and further, to charge the battery by the charging voltage depending on the use history of the battery.

### BRIEF DESCRIPTION OF THE DRAWINGS

The present invention will now be described by way of example with reference to the accompanying drawings, in which:
FIG. 1 is a front side perspective view of a charging apparatus in an embodiment, showing an appearance of the charging apparatus;
FIG. 2 is a block diagram showing an electrical configuration of the charging apparatus when a battery is attached;
FIG. 3 is a circuit diagram showing details of circuit configurations of a charging power supply circuit, a temperature detection circuit, and a charging control circuit;
FIG. 4 is a flowchart showing a flow of a charging control process.

### DETAILED DESCRIPTION OF THE PREFERRED EMBODIMENTS

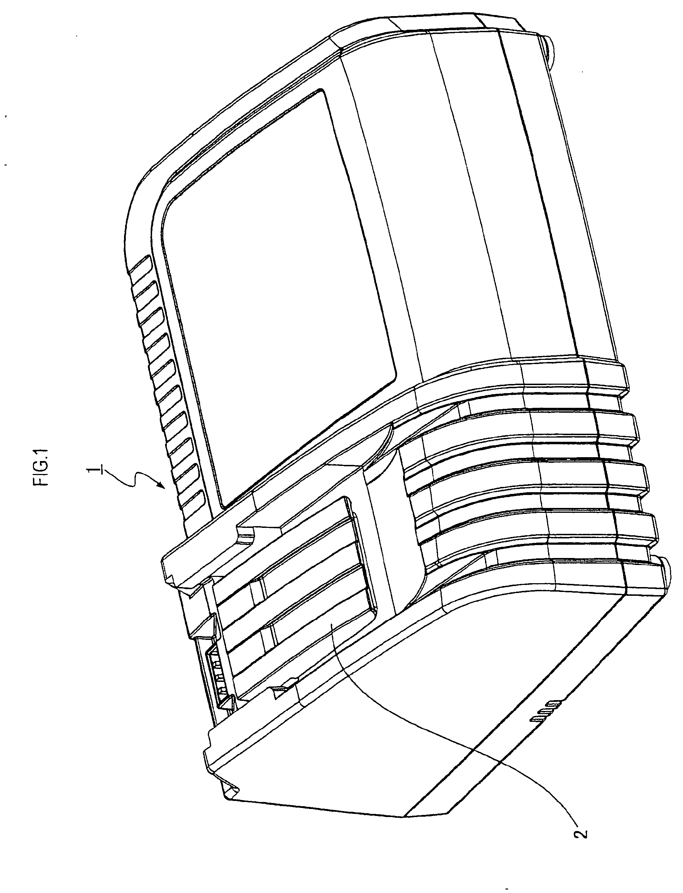

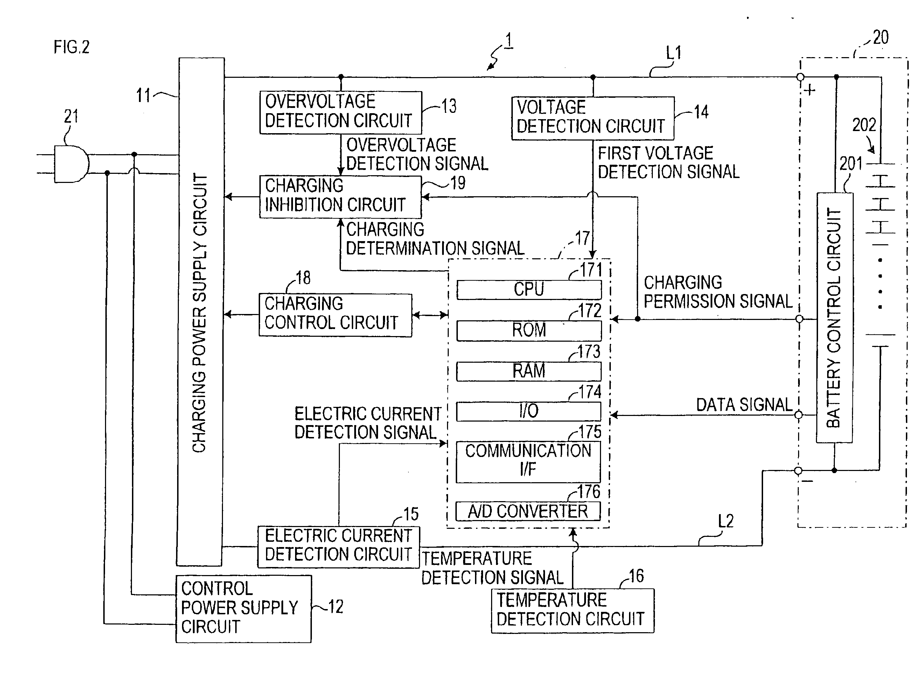

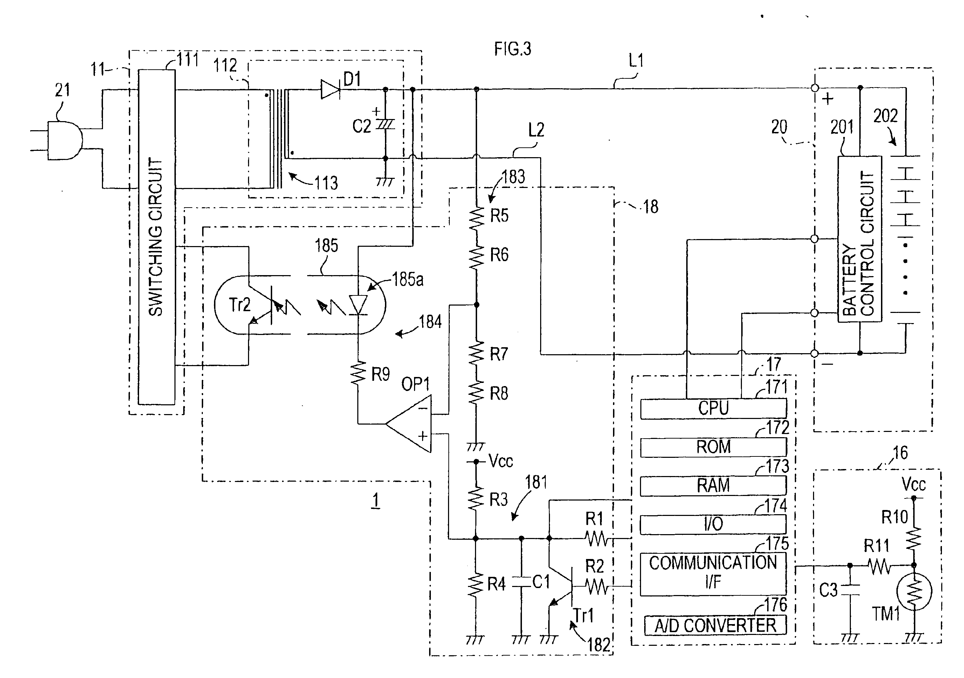

As shown in FIG. 1, a charging apparatus 1 includes an attachment portion 2 at an upper part of the charging apparatus 1. The attachment portion 2 is configured such that a battery 20 (see FIGS. 2 and 3) is detachably attached to the charging apparatus 1. More particularly, the attachment portion 2 is configured such that the battery 20 can be attached to the charging apparatus 1 by sliding the battery 20 on the attachment portion 2 from a rear side to a front side of the charging apparatus 1 Also, the attachment portion 2 is configured such that the battery 20 can be detached from the charging apparatus 1 by sliding the battery 20 on the attachment portion 2 from the front side to the rear side of the charging apparatus 1.

As shown in FIG. 2, the charging apparatus 1 includes a charging power supply circuit 11, a control power supply circuit 12, an overvoltage detection circuit 13, a voltage detection circuit 14, an electric current detection circuit 15, a temperature detection circuit 16, a main control unit 17, a charging control circuit 18, a charging inhibition circuit 19, the battery 20, and a plug 21.

The charging power supply circuit 11 converts commercial power (alternate current (AC) power: 100 VAC in the present embodiment) supplied from outside via the plug 21, into direct current (DC) power (charging power: 42 VDC at a maximum in the present embodiment) for charging the battery 20. The charging power supply circuit 11 supplies the charging power to the battery 20 via a positive side power line L1 and a negative side power line L2.

The control power supply circuit 12 converts the commercial power supplied from the outside via the plug 21, into DC power (control power) for operating each circuit in the charging apparatus 1 to supply the control power to the each circuit.

The overvoltage detection circuit 13 determines whether or not a voltage (a charging voltage) between the power lines (the positive side power line L1 and the negative side power line L2) has reached a voltage predesignated as an overvoltage. The overvoltage detection circuit 13 outputs, to the charging inhibition circuit 19, an overvoltage detection signal having two logic levels (voltage levels) depending on the determination result. More particularly, the overvoltage detection circuit 13 of the present embodiment sets the logic level of the overvoltage detection signal to "High" when the overvoltage detection circuit 13 determines that the charging voltage has not reached the overvoltage. When the overvoltage detection circuit 13 determines that the charging voltage has reached the overvoltage, the overvoltage detection circuit 13 sets the logic level of the overvoltage detection signal to "Low". The logic levels of the overvoltage detection signal in relation to the determination result by the overvoltage detection circuit 13 may be reversed from the above described logic levels.

The voltage detection circuit 14 detects a magnitude of the charging voltage, and outputs, to the main control unit 17, a first voltage detection signal having a voltage (an analog value) in accordance with the result of the detection.

The electric current detection circuit 15 detects a magnitude of electric current flowing through the negative side power line L2, and outputs, to the main control unit 17, an electric current detection signal having a voltage (an analog value) in accordance with the result of the detection.

The temperature detection circuit 16 detects a temperature (approximately the same as an ambient temperature of the charging apparatus 1) inside the charging apparatus 1, and outputs, to the main control unit 17, a temperature detection signal having a voltage (an analog value) in accordance with the result of the detection.

The main control unit 17 is a so-called one-chip microcomputer and includes therein at least a CPU 171, a ROM 172, a RAM 173, a parallel input/output port (I/O) 174, a serial communication interface (communication I/F) 175, and an analog/digital (A/D) converter 176.

In the main control unit 17, the CPU 171 executes various processes according to various programs stored in the ROM 172. Also, in the main control unit 17, analog signals inputted to input ports of the I/O 174 are converted into digital signals by the A/D converter 176 to be read by the CPU 171.

Inputted to the main control unit 17 from the battery 20 are a charging permission signal and a data signal.

The charging permission signal is a binary logic signal. When charging of the battery 20 is permitted, a logic level of the charging permission signal is set to "High", while when charging of the battery 20 is inhibited, the logic level of the charging permission signal is set to "Low". The logic level of the charging permission signal may be set to "Low" when charging of the battery 20 is permitted, while the logic level of the charging permission signal may be set to "High" when charging of the battery 20 is inhibited.

The charging permission signal may be a multi-valued analog signal (at least a three-valued analog signal). In this case, when charging of the battery 20 is permitted, a voltage of the charging permission signal may be set to a voltage which is not corresponding to a voltage at the above described logic level of "Low", and when charging of the battery 20 is inhibited, the logic level of the charging permission signal may be set to "Low".

The data signal is a binary logic signal and inputted as serial data to the main control unit 17 from the battery 20.

The main control unit 17 controls the charging control circuit 18 and the charging inhibition circuit 19 based on the first voltage detection signal, the electric current detection signal, the temperature detection signal, the charging permission signal, and the data signal.

More particularly, the main control unit 17 outputs a later explained PWM signal and a later explained discharge signal to the charging control circuit 18, and a charging determination signal to the charging inhibition circuit 19, while detecting a later explained reference voltage from the charging control circuit 18. The charging determination signal is a binary logic signal. When charging of the battery 20 is permitted, a logic level of the charging determination signal is set to "High", while when charging of the battery 20 is inhibited, the logic level of the charging determination signal is set to "Low". The logic level of the charging determination signal may be set to "Low" when charging of the battery 20 is permitted, while the logic level of the charging determination signal may be set to "High" when charging of the battery 20 is inhibited.

The charging control circuit 18 controls a charging operation of the charging power supply circuit 11 based on the PWM signal and the discharge signal from the main control unit 17.

The charging inhibition circuit 19 inhibits the charging operation of the charging power supply circuit 11. When at least one of the logic levels of the overvoltage detection signal, the charging permission signal, and the charging determination signal is "Low" (in other words, when an overvoltage is detected, or when charging is inhibited). More particularly, when all of the logic levels of the overvoltage detection signal, the charging permission signal, and the charging determination signal are "High", the charging inhibition circuit 19 sets the logic level of an output signal to the charging power supply circuit 11 to "High", thereby permitting the charging operation of the charging power supply circuit 11. When at least one of the logic levels of the overvoltage detection signal, the charging permission signal, and the charging determination signal is "Low", the charging inhibition circuit 19 sets the logic level of the output signal to the charging power supply circuit 11 to "Low", thereby inhibiting the charging operation of the charging power supply circuit 11.

The battery 20 is provided with a battery control circuit 201 and a cell portion 202.

The battery control circuit 201 includes at least a CPU (not shown), a ROM (not shown), a RAM (not shown), a nonvolatile memory (not shown) which rewritably stores data therein, a control IC (not shown) for controlling the cell portion 202, and a serial communication interface (not shown). The battery control circuit 201 controls a charging operation of the battery 20.

The battery control circuit 201 outputs the charging permission signal to the main control unit 17 (more specifically, one of the input ports of the I/O 174 included in the main control unit 17) and to the charging inhibition circuit 19, and outputs the data signal to the main control unit 17 (more specifically, the communication I/F 175 included in the main control unit 17).

The cell portion 202 includes a plurality of cells which are connected in series. Both ends of the cell portion 202 are electrically connected respectively to the positive side power line L1 and the negative side power line L2.

As shown in FIG. 3, the charging power supply circuit 11 includes a switching circuit 111 and a transformer-rectifier circuit 112.

The switching circuit 111 converts the commercial power into the DC power, and intermittently outputs the DC power to the transformer-rectifier circuit 112. In the present embodiment, the switching circuit 111 includes a full-wave rectifier circuit and at least one switching element. The switching circuit 111 is configured such that the full-wave rectifier circuit performs full-wave rectification on the commercial power, and the full-wave rectified commercial power is intermittently outputted to the transformer-rectifier circuit 112 by switching the switching element at a frequency higher than a frequency of the commercial power. The switching circuit 111 is also configured to stop switching of the switching element when a logic level of an output voltage of the charging inhibition circuit 19 indicates charge inhibition.

The transformer-rectifier circuit 112 includes a transformer 113, a diode D1, and a capacitor C2.

In the transformer 113, a positive side of a secondary side of the transformer 113 is connected to the positive side power line L1 via the diode D1, while a negative side of the secondary side of the transformer 113 is connected to the negative side power line L2 and a negative electrode (set to 0 V in the charging apparatus 1) of the control power supply circuit 12 which is not shown in FIG.3. The transformer 113 reduces a voltage of the DC power, which is intermittently supplied to a primary side of the transformer 113 from the switching circuit 111, at the secondary side of the transformer 113 to output the DC power with the reduced voltage to the positive side power line L1 and the negative side power line L2.

The diode D1 is connected to the positive side of the secondary side of the transformer 113 at an anode thereof, and connected to the positive side power line L1 at a cathode thereof.

The capacitor C2 is a so-called electrolytic capacitor. The capacitor C2 is connected to the positive side power line L1 at a positive electrode thereof and connected to the negative side power line L2 at a negative electrode thereof. That is to say, the DC power intermittently outputted from the secondary side of the transformer 113 is smoothed by the diode D1 and the capacitor C2 to be supplied to the battery 20 as the charging power.

The temperature detection circuit 16 includes a thermistor TM1, resistors R10 and R11, and a capacitor C3.

The thermistor TM1 is a resistor in which a resistance value varies depending on an ambient temperature thereof. The thermistor TM1 according to the present embodiment is a resistor in which the resistance value decreases when the ambient temperature thereof rises. The thermistor TM1 may be a resistor in which the resistance value increases when the ambient temperature threreof rises.

One end of the thermistor TM1 is connected to a positive electrode of the control power supply circuit 12 (voltage Vcc: 5 VDC in the present embodiment) via the resistor R10, and the other end is connected to the negative electrode of the control power supply circuit 12.

The resistor R11 is connected to a portion between the thermistor TM1 and the resistor R10 at one end thereof, and connected to one of the input ports of the I/O 174 included in the main control unit 17 at the other end thereof.

The capacitor C3 is connected to the other end of the resistor R11 at one end thereof, and connected to the negative electrode of the control power supply circuit 12 at the other end thereof. That is, the capacitor C3 and the resistor R11 form a low-pass filter, so that high-frequency electrical noise can be removed by the low-pass filter.

In the temperature detection circuit 16 configured as above, the voltage Vcc of the control power from the control power supply circuit 12 is divided by the resistor R10 and thermistor TM1. The divided voltage is outputted as the temperature detection signal to the main control unit 17.

In the temperature detection circuit 16 of the present embodiment, since the thermistor TM1 has an above-described electrical characteristics, when an ambient temperature of the temperature detection circuit 16 rises, the voltage of the temperature detection signal decreases, while when the ambient temperature of the temperature detection circuit 16 decreases, the voltage of the temperature detection signal increases.

The charging control circuit 18 includes a reference voltage generation circuit 181, a discharging circuit 182, a charging voltage detection circuit 183, an operational amplifier OP1, and an output circuit 184.

The reference voltage generation circuit 181 includes resistors R1, R3, and R4, and a capacitor C1.

The resistor R1 is connected to one of output ports of the I/O 174 included in the main control unit 17 at one end thereof, and connected to a non-inverting input terminal of the amplifier OP1 and one of the input ports of the I/O 174 included in the main control unit 17 at the other end thereof.

The capacitor C1 is connected to the non-inverting input terminal of the amplifier OP1 at one end thereof, and connected to the negative electrode of the control power supply circuit 12 at the other end thereof.

The resistor R3 is connected to the positive electrode of the control power supply circuit 12 at one end thereof, and connected to the non-inverting input terminal of the amplifier OP1 at the other end thereof.

The resistor R4 is connected to the negative electrode of the control power supply circuit 12 at one end thereof, and connected to the non-inverting input terminal of the amplifier OP1 at the other end thereof.

That is to say, in the reference voltage generation circuit 181, the other end of the resistor R1, the other end of the resistor R3, and the other end of the resistor R4 are connected to each other.

The discharging circuit 182 includes a transistor Tr1 and a resistor R2. The transistor Tr1 is a NPN type bipolar transistor. A collector of the transistor Tr1 is connected to the non-inverting input terminal of the amplifier OP1. An emitter of the transistor Tr1 is connected to the negative electrode of the control power supply circuit 12. A base of the transistor Tr1 is connected via the resistor R2 to one of the output ports of the I/O 174 included in the main control unit 17.

The charging voltage detection circuit 183 includes resistors R5, R6, R7, and R8.

The resistor R5 is connected to the positive side power line L1 at one end thereof, and connected to the negative electrode of the control power supply circuit 12 via the resistors R6, R7, and R8 at the other end thereof. An inverting input terminal of the amplifier OP1 is connected to a portion between the resistors R6 and R7. That is, inputted to the inverting input terminal of the amplifier OP1 is a second voltage detection signal having a voltage (an analog value) obtained by dividing the charging voltage by the resistors R5 to R8.

The output circuit 184 includes a resistor R9 and a photocoupler 185. The resistor R9 is connected to an output terminal of the amplifier OP1 at one end thereof, and connected to a cathode of a LED 185a in the photocoupler 185 at the other end thereof. An anode of the LED 185 is connected to the positive side power line L1. An emitter and a collector of a phototransistor Tr2 in the photocoupler 185 are connected to the switching circuit 111.

In the charging control circuit 18 configured as above, when the PWM signal is inputted to the non-inverting input terminal of the amplifier OP1 via the resistor R1 from the main control unit 17, the PWM signal inputted from the main control unit 17 is smoothed by the capacitor C1. The smoothed PWM signal is inputted to the non-inverting input terminal of the amplifier OP1, as the reference voltage for determining whether or not the charging voltage has reached the target charging voltage. The PWM signal in the present embodiment is set in such a manner that when a logic level of the PWM signal is "Low", the voltage of the PWM signal is equal to 0 V. The PWM signal in the present embodiment is also set in such a manner that an amplitude of the voltage of the PWM signal is equal to the voltage Vcc of the positive electrode of the control power supply circuit 12.

In the charging control circuit 18, when the duty ratio of the PWM signal is a maximum ratio (i.e., 100 %), a magnitude of a voltage (Vcc) applied to the above described one end of the resistor R1 and a magnitude of a voltage (Vcc) applied to the above described one end of the resistor R3 are the same.

In this case, in the charging control circuit 18, an equivalent circuit is formed in which the resistors R1 and R3 are parallel-connected to each other, and the resistor R4 is series-connected to the parallel-connected circuit. Due to the equivalent circuit constituted as such, the voltage (the reference voltage) inputted to the non-inverting input terminal of the amplifier OP1, has a magnitude obtained by dividing the voltage Vcc, by a combined resistor of the resistors R1 and R3, and the resistor R4.

In the charging control circuit 18, when the duty ratio of the PWM signal is a minimum ratio (i.e., 0 %), a magnitude of a voltage (0 V) applied to the above described one end of the resistor R1 and a magnitude of a voltage (0 V) applied to the above described one end of the resistor R4 are the same.

In this case, in the charging control circuit 18, an equivalent circuit is formed in which the resistors R1 and R4 are parallel-connected to each other, and the resistor R3 is series-connected to the parallel-connected circuit. Due to the equivalent circuit as such, the voltage (the reference voltage) inputted to the non-inverting input terminal of the amplifier OP1, has a magnitude obtained by dividing the voltage Vcc, by a combined resistor of the resistors R1 and R4, and the resistor R3.

Resistance values of the resistors R1, R3, and R4 in the present embodiment are set in such a manner that, when the duty ratio of the PWM signal is the minimum ratio, the voltage (the reference voltage) inputted to the non-inverting input terminal of the amplifier OP1 has a magnitude corresponding to a lower limit (in the present embodiment, 18 VDC) of the target charging voltage.

In the charging control circuit 18, when a current signal for turning on the transistor Tr1 is inputted to the base of the transistor Tr1 via the resistor R2 from the main control unit 17, the transistor Tr1 is turned on to discharge an electric charge accumulated in the capacitor C1 to the negative electrode of the control power supply circuit 12.

Also, in the charging control circuit 18, the amplifier OP1 compares the voltage of the second voltage detection signal and the reference voltage. When the voltage of the second voltage detection signal has not reached to the reference voltage, a logic level of an output voltage of the amplifier OP1 is set to "High", while when the voltage of the second voltage detection signal has reached to the reference voltage, the logic level of the output voltage of the amplifier OP1 is set to "Low".

Further, in the charging control circuit 18, when the logic level of the output voltage of the amplifier OP1 is set to "High", the LED 185a in the photocoupler 185 is turned off and the phototransistor Tr2 in the photocoupler 185 is turned off. when the logic level of the output voltage of the amplifier OP1 is set to "Low", the LED 185a in the photocoupler 185 is turned on and the phototransistor Tr2 in the photocoupler 185 is turned on. When the phototransistor Tr2 is turned off, the switching circuit 111 repeats the switching of the switching element, while setting an ON period of the switching element in a switching cycle in a gradually increasing manner. As a result of the above switching operation, the charging voltage is gradually increased. When the phototransistor Tr2 is turned on, the switching circuit 111 stops the switching of the switching element. As a result of stopping the switching operation, the charging voltage is gradually decreased.

Hereinafter, a charge control process executed by the main control unit 17 (more particularly, by the CPU 171) will be explained.

The main control unit 17 executes the present process when the battery 20 is attached to the charging apparatus 1.

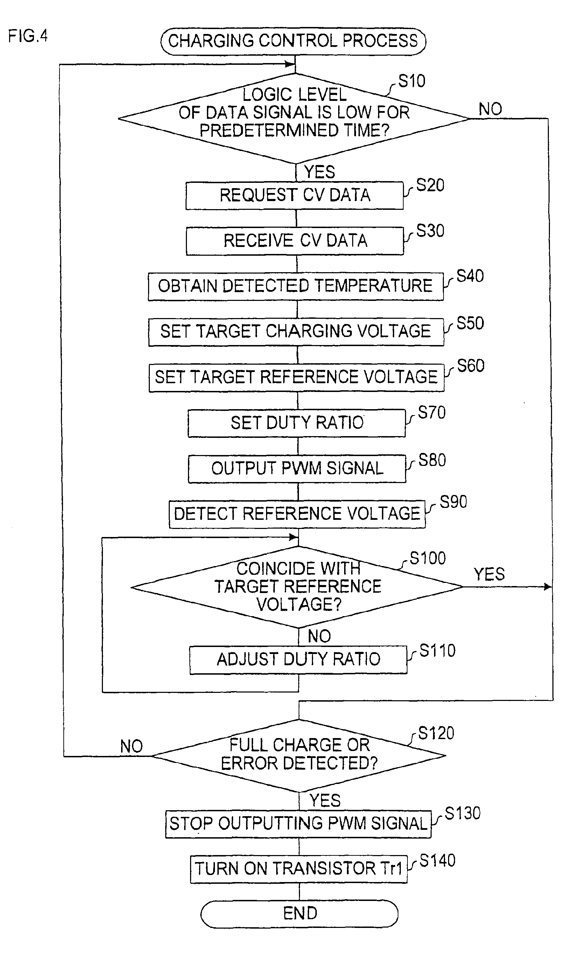

As shown in FIG. 4, in the present process, it is firstly determined whether or not the logic level of the data signal inputted from the battery 20 is "Low" for a predetermined period of time (in the present embodiment, 10 msec) (S10). In other words, in S10, it is determined whether or not the data signal can be requested from the battery 20.

If the logic level of the data signal is not "Low" for the predetermined period of time (S10: No), the present process immediately proceeds to a later explained S120. If the logic level of the data signal is "Low" for the predetermined period of time (S10: Yes), a CV data is requested to the battery control circuit 201 of the battery 20 (S20). The CV data is a data in which at least one of characteristics of the battery 20 (e.g., capacity of the battery 20) and use history of the battery 20 and the like are set.

When the CV data is received (S30), a temperature detected by the temperature detection circuit 16 is obtained based on the temperature detection signal from the temperature detection circuit 16 (S40). Subsequently, based on the CV data and the temperature detected by the temperature detection circuit 16, the target charging voltage appropriate for charging the battery 20 is set (S50). Thereafter, a target reference voltage which is to be set as the reference voltage depending on the target charging voltage is set (S60). The target reference voltage may be prestored, associated with the target charging voltage, in the ROM 172 included in the main control unit 17. Alternatively, a calculation procedure for calculating the target reference voltage, which is to be set in relation to the target charging voltage, may be prestored in the ROM 172, and the CPU 171 may perform calculation of the target reference voltage in accordance with the calculation procedure.

After the setting of the target reference voltage is completed, a duty ratio corresponding to the target charging voltage is calculated, and the calculated duty ratio is set as the duty ratio of the PWM signal to be outputted (S70). The PWM signal having the duty ratio set in S70 is outputted (S80), and the reference voltage is detected (S90). It is then determined whether or not the detected reference voltage coincides with the target reference voltage (S100).

If the detected reference voltage does not coincide with the target reference voltage (S100: No), the duty ratio is adjusted (S110), and then the present process returns to S100. In S110, the duty ratio may be adjusted by increasing or decreasing the duty ratio by a preassigned amount. Alternatively, a difference between the detected reference voltage and the target reference voltage may be calculated, and the duty ratio may be adjusted based on the calculated difference.

If the detected reference voltage coincides with the target reference voltage (S100: Yes), it is determined whether or not a full charge of the battery 20 or an abnormality in the battery 20 is detected (S120). If neither the full charge of the battery 20 nor the abnormality in the battery 20 is detected (S120: No), the present process returns to S10. If the full charge of the battery 20 or the abnormality in the battery 20 is detected (S120: Yes), outputting the PWM signal is stopped (S130), and then the transistor Tr1 is turned on (S140). Thereafter, the present process is ended.

In the charging apparatus 1 as configured above, it is possible to generate a reference voltage, which is variable to any value, by smoothing the PWM signal, and further, to limit a maximum value and a minimum value of the reference voltage. Therefore, the reference voltage can be inhibited from deviating from an appropriate range even if the duty ratio of the PWM signal is not appropriately set. That is, the charging apparatus 1 can change the reference voltage to any value within the appropriate range.

More particularly, in the charging apparatus 1, the maximum value of the reference voltage can be set to be smaller than the voltage Vcc, while the minimum value of the reference voltage can be set to be larger than 0 V. Also, in the charging apparatus 1, the electric charge accumulated in the capacitor C1 can be discharged to the negative electrode of the control power supply circuit 12 by the transistor Tr1. Thus, the reference voltage can be rapidly decreased.

In addition, in the charging apparatus 1, since the duty ratio of the PWM signal is adjusted such that the reference voltage coincides with the target reference voltage, the reference voltage can be accurately reached to the target reference voltage, and further, the charging voltage can be accurately reached to the target charging voltage.

Moreover, in the charging apparatus 1, the target charging voltage is set in accordance with the ambient temperature of the charging apparatus 1, the at least one of characteristics of the battery 20, and the use history of the battery 20. Depending on the set target charging voltage, the duty ratio of the PWM signal is set. Therefore, the battery 20 can be charged at an appropriate charging voltage for the battery 20.

Although one embodiment of the present invention has been described above, it is to be understood that the present invention should not be limited to the above embodiment, but may be embodied in various forms within the technical scope of the present invention.

For example, in the charging apparatus 1 of the above embodiment, the reference voltage is generated by smoothing the PWM signal. However, a D/A converter may be used to generate the reference voltage.

Also, in the charging apparatus 1 of the above embodiment, the ambient temperature of the charging apparatus 1 is detected, and then, the duty ratio is set based on the detected temperature. However, environment other than a temperature (e.g., humidity) may be detected to set the duty ratio based on the detected environment.

In the above described embodiment, the transistor Tr1 is the NPN type bipolar transistor. However, the transistor Tr1 may be a PNP type bipolar transistor. Alternatively, the transistor Tr1 may be other switching elements such as a field-effect transistor or an IGBT.

Moreover, in the above described embodiment, one capacitor is used for smoothing the PWM signal. However, smoothing the PWM signal may be performed by using a plurality of capacitors each of which is connected in either series or parallel.

Also, while the main control unit 17 outputs the PWM signal in the above described embodiment, an electronic circuit that outputs the PWM signal may be separately provided.

In the above described embodiment, the amplitude in the voltage of the PWM signal is set to be equal to the voltage Vcc. However, the amplitude in the voltage of the PWM signal may be set to a voltage different from the voltage Vcc.

While the voltage Vcc is applied to the one end of the resistor R3 in the above described embodiment, a voltage different from the voltage Vcc may be applied. Also, the voltage at the one end of the resistor R4 is set to 0 V in the above described embodiment, the voltage may be set to a voltage other than 0 V.

Moreover, in the above described embodiment, the operational amplifier is used to compare the magnitude of the reference voltage and a magnitude of the voltage in the second voltage detection signal. However, a comparator, instead of the operational amplifier, may be used.

Furthermore, in the above described embodiment, the reference voltage generation circuit 181 is configured to limit both of the maximum value and the minimum value of the reference voltage. However, the reference voltage generation circuit 181 may be configured to limit only either one of the maximum value and the minimum value of the reference voltage.

In the above described embodiment, the circuit in which the resistors R1, R3, and R4 are connected to each other is used to limit the maximum value and the minimum value of the reference voltage. However, a circuit, other than the above described circuit, may be used to limit the maximum value and the minimum value of the reference voltage. For example, a known limiter circuit using at least one operational amplifier may be used to limit at least one of the maximum value and the minimum value of the reference voltage.

Also, the reference voltage generation circuit 181 of the above described embodiment is configured to limit the maximum value or the minimum value of the reference voltage when the duty ratio of the PWM signal is 100 % or 0 %. However, the reference voltage generation circuit 181 may be configured to limit the maximum value and the minimum value of the reference voltage when the duty ratio is other than 100 % and 0 %. In this case, for example, the above described limiter circuit may be used.

The main control unit 17, which is constituted by a microcomputer in the above embodiment, may be constituted by an ASIC (Application Specific Integrated Circuits) or a programmable logic device, such as FPGA (Field Programmable Gate Array), It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A charging apparatus (1), comprising:
a charging voltage output unit (11) that outputs a charging voltage which is a voltage to charge a battery (20) for an electric power tool, to the battery (20);
a duty ratio setting unit (171) that sets a duty ratio of a PWM signal based on a target charging voltage which is a target voltage for the charging voltage;
a PWM signal output unit (171, 174) that outputs the PWM signal having the duty ratio set by the duty ratio setting unit (171);
a reference voltage generation unit (181) that generates a reference voltage for determining whether or not the charging voltage has reached the target charging voltage, by smoothing the PWM signal outputted from the PWM signal output unit (171, 174);
a reference voltage limit unit (181) that limits at least one of a maximum value and a minimum value of the reference voltage generated by the reference voltage generation unit (181);
a detected voltage generation unit (183) that detects the charging voltage outputted from the charging voltage output unit (11) and generates a detected voltage which is a voltage in accordance with a result of the detection; and
a charging voltage control unit (OP1, 184, 111) that controls the charging voltage outputted from the charging voltage output unit (11) based on the detected voltage and the reference voltage.

2. The charging apparatus (1) according to claim 1,
wherein the reference voltage limit unit (181) comprises:
a first resistor (R1);
a second resistor (R4); and
a third resistor (R3),
wherein the PWM signal is applied to one end of the first resistor (R1), a preassigned first voltage is applied to one end of the second resistor (R4), and a preassigned second voltage larger than the first voltage is applied to one end of the third resistor (R3), and
wherein the other end of the first resistor (R1), the other end of the second resistor (R4), and the other end of the third resistor (R3) are connected to each other.

3. The charging apparatus (1) according to claim 2,
wherein a voltage of the PWM signal, when a logic level of the PWM signal is LOW, is equal to the first voltage, and
wherein an amplitude in the voltage of the PWM signal is equal to a voltage difference between the first voltage and the second voltage.

4. The charging apparatus (1) according to one of claims 1 to 3, wherein the reference voltage generation unit (181) comprises at least one capacitor (C1) for smoothing the PWM signal.

5. The charging apparatus (1) according to claim 4, further comprising a discharge unit (182) that discharges an electric charge accumulated in the at least one capacitor (C1).

6. The charging apparatus (1) according to one of claims 1 to 5, further comprising:
a reference voltage detection unit (171, 174, 176) that detects a magnitude of the reference voltage; and
a duty ratio adjustment unit (171) that adjusts the duty ratio set by the duty ratio setting unit (171), such that the magnitude of the reference voltage detected by the reference voltage detection unit (171, 174, 176) coincides with a magnitude of a target reference voltage which is a target voltage for the reference voltage in accordance with the target charging voltage.

7. The charging apparatus (1) according to one of claims 1 to 6, further comprising a target charging voltage setting unit (171) that sets the target charging voltage based on at least one preassigned setting condition.

8. The charging apparatus (1) according to claim 7, further comprising an environment detection unit (16) that detects an ambient environment of the charging apparatus (1),
wherein, at least a result of the detection by the environment detection unit (16) is set to the target charging voltage setting unit (171) as the at least one setting condition.

9. The charging apparatus (1) according to claim 7 or 8, further comprising a battery information obtaining unit (171, 175) that obtains from the battery (20) a battery information which is information related to the battery (20),
wherein at least the battery information obtained by the battery information obtaining unit (171, 175) is set to the target charging voltage setting unit (171) as the at least one setting condition.

10. The charging apparatus (1) according to claim 9,
wherein the battery information is information indicating at least one of characteristics of the battery (20).

11. The charging apparatus (1) according to claim 9 or 10,
wherein the battery information is information indicating use history of the battery (20).
